(19) Europäisches Patentamt
European Patent Office
Office européen des brevets

(11) **EP 4 534 626 A1**

(12) **EUROPEAN PATENT APPLICATION**
published in accordance with Art. 153(4) EPC

(43) Date of publication:
**09.04.2025   Bulletin 2025/15**

(21) Application number: **23815819.0**

(22) Date of filing: **18.05.2023**

(51) International Patent Classification (IPC):
**C09K 3/00** (2006.01)          **D21H 19/20** (2006.01)
**D21H 21/14** (2006.01)

(52) Cooperative Patent Classification (CPC):
**C09K 3/00; D21H 19/20; D21H 21/14**

(86) International application number:
**PCT/JP2023/018639**

(87) International publication number:
**WO 2023/234060 (07.12.2023 Gazette 2023/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **02.06.2022   JP 2022090335**

(71) Applicant: **MEISEI CHEMICAL WORKS, LTD.
Kyoto-shi, Kyoto 615-8666 (JP)**

(72) Inventors:
• **FURUSAWA, Hiroki
  Kyoto-shi, Kyoto 615-8666 (JP)**
• **OKUBO, Kazunori
  Kyoto-shi, Kyoto 615-8666 (JP)**
• **MATSUMURA, Tatsuya
  Kyoto-shi, Kyoto 615-8666 (JP)**

(74) Representative: **Mewburn Ellis LLP
Aurora Building
Counterslip
Bristol BS1 6BX (GB)**

(54) **OIL-RESISTANT AGENT COMPOSITION AND OIL-RESISTANT PRODUCT**

(57)    Provided is a non-fluorine-based oil-resistant agent composition which can impart excellent oil resistance to a base material without using a fluorine-based compound and from which oil-resistant paper having both excellent oil resistance and air permeability can be obtained, in particular, when treated on a paper base material. This non-fluorine-based oil-resistant agent composition comprises a non-fluorine-based compound having a C1-C60 hydrocarbon group and a neutralized acidic functional group at least in a constitutional unit, wherein: the proportion of the neutralized acidic functional group in the non-fluorine-based compound is 0.4-21 mass%; and when the non-fluorine-based compound is a copolymer including constitutional units derived from an unsaturated monomer having a C1-C60 hydrocarbon group, an unsaturated monomer having an acidic functional group, and an unsaturated monomer having a nonionic functional group, and the unsaturated monomer having a nonionic functional group is an unsaturated monomer having a hydroxyl group as the nonionic functional group, the mass ratio (unsaturated monomer having a hydroxyl group/unsaturated monomer having an acidic functional group) of the unsaturated monomer having a hydroxyl group to the unsaturated monomer having an acidic functional group is at most 2.6.

EP 4 534 626 A1

**Description**

Technical Field

The present invention relates to an oil-proof agent composition and an oil-proof product (particularly, oil-proof paper) obtained using the same.

Background Art

Conventionally, studies for imparting an antistaining function to a substrate have been conducted in various fields such as a fiber field and a paper field. Examples of the antistaining function include prevention of attachment (prevention of infiltration) of an aqueous stain due to water repellency, prevention of attachment (prevention of infiltration) of an oily stain due to oil repellency or oil-proof properties, and removal of an attached stain by washing or the like.

Conventionally, a compound having a perfluoroalkyl group has been used because it can impart superior water repellency, oil repellency, and oil-proof properties. However, in recent years, toxicity and environmental persistence of perfluorooctanesulfonic acid (PFOS) and perfluorooctanoic acid (PFOA) have been regarded as problems, and use of a chemical agent containing these and a chemical agent that may be decomposed to generate those acids after release to the environment has been avoided. Furthermore, substitution to a chemical agent using no fluorinated compound itself and composed of a non-fluorinated compound has been promoted.

Among the antistaining functions, oil repellency and oil-proof properties largely depend on the properties of the perfluoroalkyl group, and it is still difficult to switch to a non-fluorinated chemical agent.

Examples of an oil-proof product in which such a chemical agent is used include oil-proof paper, which is widely used as a material for a packaging container for detergents, confectionery, dry foods, and the like. There are various applications, and a paper board to which oil-proof properties are imparted is often used for a box for foods such as confectionery, particularly, a box for chocolate confectionery containing a large amount of oils and fats, and thin paper to which oil-proof properties are imparted is often used for a container for packaging fried foods such as fast foods, and a packaging container for take-out foods in a department store, a convenience store, and the like.

Examples of the means for imparting oil-proof properties to paper include a cooking sheet in which a fluorinated oil-proof agent is applied to a surface of paper or a paper board to provide an oil-proof layer, and an oil-proof board paper for confectionary boxes in which a fluorinated oil-proof agent layer is provided between paper layers. However, it has been confirmed that paper using a fluorinated oil-proof agent allows a fluorotelomer alcohol and the like to generate when the paper is heated at a food cooking temperature of 100 to 180°C, and oil-proof paper using no fluorinated oil-proof agent is further demanded.

As oil-proof paper as a substitute for a fluorinated oil-proof agent, oil-proof paper such as paper obtained by applying a non-fluorinated acrylic resin oil-proof agent to a paper substrate, polyethylene film-bonded paper, paper obtained by applying a polyethylene resin, and paper obtained using a silicone-based or wax-based oil-proof agent, and techniques for producing the oil-proof papers have been disclosed. However, since each of the oil-proof papers has merits and demerits, some of the oil-proof papers have been put into practical use. However, there still is users' strong demand for improvement.

Meanwhile, since oil-proof paper using a fluorinated oil-proof agent can obtain oil-proof properties with a small amount of oil-proof agent used, a method of adding an oil-proof agent to a pulp slurry during the papermaking process or applying an oil-proof agent with a size press to a surface of the resulting paper after papermaking is mainly adopted.

On the other hand, when a non-fluorinated compound is used, the non-fluorinated compound has poor oil repellency as compared with a fluorinated compound, and it is common to provide a thick oil-proof layer on a surface layer of paper to prevent infiltration of an oils and fats component or the like. Examples thereof include a method of obtaining an oil-proof layer without forming pinholes by applying a non-fluorinated acrylic resin emulsion, and a method of laminating a polyethylene film.

However, for the oil-proof paper obtained by the above method to exhibit oil-proof properties equivalent to that of the fluorinated oil-proof agent, it is necessary to form an oil-proof layer using a large amount of oil-proof agent, and accordingly, there is a problem that air permeance cannot be obtained at all or is greatly reduced. When a hot food is put into a packaging material having no sufficient air permeability, or when the packaging material is reheated in a microwave oven or the like, generated water vapor is less likely to be released to the outside, and there arises a problem that the texture of a food such as French fries, croquettes, or tempuras is deteriorated, for example.

Here, for example, PTL 1 proposes oil-proof paper including a paper substrate and oil-proof layers on both surfaces of the paper substrate, in which the paper substrate contains leaf bleached kraft pulp and needle bleached kraft pulp as pulps, a blending ratio of the pulps is in a range of 0/100 to 70/30 (mass ratio), a beating degree based on a Schopper-Riegler method is 45°SR or more, a tension degree is 0.45 g/cm$^3$ or more and 0.75 g/cm$^3$ or less, and a Stöckigt sizing is 5 seconds or more, and the oil-proof layers contain at least a styrene-acrylic copolymer resin and paraffin wax as oil-proof agents, and a blending ratio of the styrene-acrylic copolymer resin and the paraffin wax is 90 : 10 to 10 : 90 (mass ratio) (Oken type air permeance is 10,000 seconds or less).

In addition, for example, PTL 2 proposes oil-proof paper in which an oil-proof agent layer is formed on at least one surface of a paper support, the oil-proof agent layer contains starch containing a hydrophobic group and wax, and the oil-proof paper has an Oken type air permeance of 2000 seconds or less as measured in accordance with the provisions of JAPAN TAPPI Paper Pulp Test Method No. 5-2: 2000.

In addition, as an oil-proof agent capable of imparting oil-proof properties and water resistance to paper, for example, PTL 3 proposes an oil-proof agent for paper containing a non-fluorine copolymer having (a) a repeating unit formed from an acrylic monomer having a long chain hydrocarbon group having 7 to 40 carbon atoms and (b) a repeating unit formed from an acrylic monomer having a hydrophilic group.

Furthermore, for example, PTL 4 discloses oil-proof paper obtained using a non-fluorinated material and a method for producing the same, and proposes to use, as an oil-proof agent, an acrylic copolymer obtained by emulsion polymerization of a monomer mixture of (a) 5 to 80% by mass of an ethylenically unsaturated carboxylic acid-containing monomer, (b) 10 to 95% by mass of a (meth)acrylic acid alkyl ester monomer, and (c) 0 to 80% by mass of at least one monomer selected from among other monomers copolymerizable with those monomers.

However, although the oil-proof papers obtained by applying the oil-proof agents disclosed in PTLs 1 to 4 can obtain oil-proof properties, air permeability is still insufficient, and there are problems such as deterioration of texture to foods.

In addition, regarding the oil-proof properties, sufficient performance may not be exhibited due to the influence of the production method of a paper substrate or the like.

Citation List

Patent Literature

PTL 1: Japanese Patent Laid-open Publication No. 2020-122250
PTL 2: Japanese Patent Laid-open Publication No. 2013-237941
PTL 3: WO 2020/054856 A
PTL 4: Japanese Patent Laid-open Publication No. 2014-025163

Summary of Invention

Technical Problem

A main object of the present invention is to provide a non-fluorinated oil-proof agent composition which can impart superior oil-proof properties to a substrate without using a fluorinated compound and from which oil-proof paper having both superior oil-proof properties and air permeability can be obtained, in particular, when treated on a paper substrate.

Solution to Problem

As a result of intensive studies to solve the above problems, the present inventors have found that superior oil-proof properties and superior air permeability can be imparted to paper as a result of making an oil-proof agent composition contain a non-fluorinated compound having a hydrocarbon group having 1 to 60 carbon atoms and a neutralized acidic functional group in at least a structure thereof, and controlling the proportion of the neutralized acidic functional group (excluding the mass of the neutralizing agent) in the non-fluorinated compound within a prescribed range even though no fluorinated compound is contained. The present invention has been accomplished through further intensive studies based on such findings.

In summary, the present invention provides aspects with the following configurations:

Item 1. A non-fluorinated oil-proof agent composition comprising a non-fluorinated compound having a hydrocarbon group having 1 to 60 carbon atoms and a neutralized acidic functional group in at least a constitutional unit thereof,

wherein a proportion of the neutralized acidic functional group in the non-fluorinated compound is 0.4 to 21% by mass,
when the non-fluorinated compound is a copolymer containing constitutional units derived from an unsaturated monomer having a hydrocarbon group having 1 to 60 carbon atoms, an unsaturated monomer having an acidic functional group, and an unsaturated monomer having a nonionic functional group, and the unsaturated monomer having a nonionic functional group is an unsaturated monomer having a hydroxy group as a nonionic functional group, a mass ratio of the unsaturated monomer having a hydroxy group to the unsaturated monomer having an acidic functional group (the unsaturated monomer having a hydroxy group/the unsaturated monomer having an acidic functional group) is 2.6 or less.

Item 2. The non-fluorinated oil-proof agent composition according to item 1, wherein the non-fluorinated compound contains a structure derived from the unsaturated monomer having a hydrocarbon group having 1 to 60 carbon atoms and the unsaturated monomer having an acidic functional group.

Item 3. The non-fluorinated oil-proof agent composition according to item 1 or 2, wherein the non-fluorinated compound further contains a structure derived from the unsaturated monomer having a nonionic functional group.

Item 4. The non-fluorinated oil-proof agent composition according to any one of items 1 to 3, wherein the nonionic functional group is at least one selected from the group consisting of a hydroxy group, a phenolic hydroxy group, a nitrile group, an amide group, a (thio)urethane group, a (thio)urea group, a (thio)carbonate group, and an ester group.

Item 5. The non-fluorinated oil-proof agent composition according to any one of items 1 to 4, which is used for paper applications.

Item 6. The non-fluorinated oil-proof agent composition according to any one of items 1 to 5, which is used for food contact applications.

Item 7. An oil-proof product in which the non-fluorinated compound according to any one of items 1 to 6 is present on at least one of a surface or an interior part of a substrate.

Item 8. Oil-proof paper including the non-fluorinated compound according to any one of items 1 to 6, wherein a plane portion of the oil-proof paper has a kit value measured in accordance with TAPPI UM-557 of 1 to 6.

Item 9. The oil-proof paper according to item 8, wherein the oil-proof paper has a Gurley air permeance measured in accordance with the provision of JIS P 8117: 2009 of 1000 seconds or less.

Advantageous Effects of Invention

By treating a substrate using the non-fluorinated oil-proof agent composition of the present invention, superior oil-proof properties can be imparted to the substrate without using a fluorinated compound. In particular, oil-proof paper obtained by treating paper using the non-fluorinated oil-proof agent composition of the present invention is superior in oil-proof properties (in the kit method) and also superior in air permeability. Therefore, when oil-proof paper is produced using the non-fluorinated oil-proof agent composition of the present invention, it is possible to effectively control deterioration of the texture and the like of foods.

In addition, the non-fluorinated oil-proof agent composition of the present invention is easy to adjust the balance between hydrophilicity and hydrophobicity, and can also adjust water resistance according to requirements such as printability.

Description of Embodiments

The non-fluorinated oil-proof agent composition of the present invention is a non-fluorinated oil-proof agent composition containing a non-fluorinated compound having, in at least a constitution thereof, a hydrocarbon group having 1 to 60 carbon atoms and a neutralized acidic functional group, wherein a proportion of the neutralized acidic functional group (excluding the mass of the neutralizing agent) in the non-fluorinated compound is 0.4 to 21% by mass. It is noted that, in the non-fluorinated oil-proof agent composition of the present invention, when the non-fluorinated compound is a copolymer containing constitutional units derived from an unsaturated monomer having a hydrocarbon group having 1 to 60 carbon atoms, an unsaturated monomer having an acidic functional group, and an unsaturated monomer having a nonionic functional group, and the unsaturated monomer having a nonionic functional group is an unsaturated monomer having a hydroxy group as a nonionic functional group, a mass ratio of the unsaturated monomer having a hydroxy group to the unsaturated monomer having an acidic functional group (the unsaturated monomer having a hydroxy group/the unsaturated monomer having an acidic functional group) is 2.6 or less. In the present invention, that mass ratio is calculated using the mass of the unsaturated monomer having an acidic functional group that is not neutralized as the "mass of the unsaturated monomer having an acidic functional group", regardless of the presence or absence of neutralization of the acidic functional group.

Since the non-fluorinated oil-proof agent composition of the present invention has the above configuration, superior oil-proof properties can be imparted to a substrate without using any fluorinated compound. In particular, oil-proof paper obtained by treating paper using the non-fluorinated oil-proof agent composition of the present invention is superior in oil-proof properties (in the kit method) and also superior in air permeability. Hereinafter, the non-fluorinated oil-proof agent composition of the present invention will be described in detail.

<Non-fluorinated compound>

The non-fluorinated compound contained in the non-fluorinated oil-proof agent composition of the present invention has at least a hydrocarbon group having 1 to 60 carbon atoms and a neutralized acidic functional group in the constitution thereof. Furthermore, a proportion of the neutralized acidic functional group (excluding the mass of the neutralizing agent) in the non-fluorinated compound is 0.4 to 21% by mass. Therefore, the non-fluorinated compound may be either a low-molecular compound or a polymer compound.

It is noted that when the non-fluorinated compound is a copolymer containing constitutional units derived from an unsaturated monomer having a hydrocarbon group having 1 to 60 carbon atoms, an unsaturated monomer having an acidic functional group, and an unsaturated monomer having a nonionic functional group, and the nonionic functional group is a hydroxy group, the mass ratio in the monomers forming the copolymer (that is, the mass ratio of the unsaturated monomer having a hydroxy group as a nonionic functional group to the unsaturated monomer having an acidic functional group) (the unsaturated monomer having a hydroxy group/the unsaturated monomer having an acidic functional group) is 2.6 or less.

The hydrocarbon group having 1 to 60 carbon atoms is not particularly limited, and examples thereof include a monovalent aliphatic hydrocarbon group, an alicyclic hydrocarbon group, and an aromatic hydrocarbon group. In addition, these functional groups may be functional groups further containing one or more selected from among a monovalent or higher valent aliphatic hydrocarbon group, an alicyclic hydrocarbon group, and an aromatic hydrocarbon group as long as the number of carbon atoms does not deviate from the range of 1 to 60. The hydrocarbon group may be partially or entirely halogenated (excluding fluorine).

The hydrocarbon group having 1 to 60 carbon atoms can be appropriately selected according to required performance, and for example, from the viewpoint of enhancing water resistance, it is preferable to contain an aliphatic hydrocarbon group optionally having one or more unsaturated bonds, it is preferable to contain a linear or branched alkyl group, and it is most preferable to contain a linear alkyl group.

The hydrocarbon group to be contained preferably has 4 or more carbon atoms, more preferably has 8 or more carbon atoms, still more preferably has 12 or more carbon atoms, and most preferably has 16 or more carbon atoms. The upper limit of the number of carbon atoms is preferably 50 or less, more preferably 40 or less, still more preferably 30 or less, and most preferably 28 or less. In particular, it is preferable to contain a hydrocarbon group having 16 to 24 carbon atoms.

Examples of the acidic functional group include functional groups that exhibit acidity such as a carboxy group ($-COOH$), a sulfonic acid group ($-SO_3H$), a sulfuric acid ester group ($-OSO_3H$), a phosphoric acid ester group ($-OPO_3H$), a monoester form of a phosphoric acid ester group ($-OP(=O)(OH)O-$), a phosphonic acid group ($-P(=O)(OH)_2$), a monoester form of a phosphonic acid group ($-P(=O)(OH)O-$), and a phosphinic acid group ($-P(=O)(OH)-$).

As the neutralizing agent for the acidic functional group, a hydroxide of an alkali metal or an alkaline earth metal can be preferably used, and sodium hydroxide or potassium hydroxide is particularly preferable. Ammonia and organic amines can also be suitably used. As an organic amine, a primary, secondary, or tertiary amine compound can be used, and examples thereof include alkyl amines such as monoethylamine, diethylamine, and triethylamine, amino alcohols such as monoethanolamine, diethanolamine, triethanolamine, dimethylaminoethanol, and 2-amino-2-methyl-1-propanol, and heterocyclic amines such as morpholine and piperazine. Ammonia, triethylamine, monoethanolamine, diethanolamine, triethanolamine, dimethylaminoethanol, and 2-amino-2-methyl-1-propanol can be preferably used. Two or more of the neutralizing agents may be used in combination.

The non-fluorinated compound of the present invention is only required to have at least a hydrocarbon group having 1 to 60 carbon atoms and a neutralized acidic functional group in the structure thereof, wherein a proportion of the neutralized acidic functional group (excluding the mass of the neutralizing agent) in the non-fluorinated compound is 0.4 to 21% by mass, but from the viewpoint of oil-proof properties, the lower limit of the proportion is preferably 0.6% by mass or more, more preferably 0.7% by mass or more, still more preferably 1.0% by mass or more, particularly preferably 1.5% by mass or more, and most preferably 2.0% by mass or more. The upper limit is preferably 20% by mass or less, more preferably 19% by mass or less, still more preferably 18% by mass or less, particularly preferably 17% by mass or less, and most preferably 16% by mass or less.

Specific examples of the low-molecular compound among the non-fluorinated compounds include neutralization salts of myristic acid, palmitic acid, stearic acid, oleic acid, nonadecylic acid, arachidic acid, henicosylic acid, behenic acid, tricosylic acid, lignoserinic acid, and montanic acid; neutralization salts of dialkyl sulfosuccinates such as distearyl sulfosuccinate; neutralization salts of dialkylnaphthalenesulfonic acids such as didodecylnaphthalenesulfonic acid; and neutralization salts of dialkyl phosphates such as dimyristyl phosphate, dicetyl phosphate, and distearyl phosphate.

On the other hand, when the non-fluorinated compound is a polymer compound, examples thereof include a copolymer containing constitutional units derived from an unsaturated monomer having a hydrocarbon group having 1 to 60 carbon atoms and an unsaturated monomer having an acidic functional group.

The unsaturated monomer having a hydrocarbon group having 1 to 60 carbon atoms is not particularly limited as long as it is a monomer having a polymerizable unsaturated bond and a hydrocarbon group having 1 to 60 carbon atoms in the structure thereof. For example, the polymerizable unsaturated bond and the hydrocarbon group having 1 to 60 carbon atoms may be bonded directly to each other or may be bonded together with a divalent or higher valent atomic group interposed therebetween.

The unsaturated monomer having a hydrocarbon group having 1 to 60 carbon atoms is preferably a compound represented by the following general formula (1).

$$CH_2=C(-X)-C(=O)-Y-R \qquad (1)$$

wherein X is a hydrogen atom, a monovalent organic group (for example, a methyl group and an ethyl group), a halogen atom (excluding a fluorine atom), a cyano group, or a group $-CH_2-C(=O)-Y-R$, Y is -NR- or a divalent to tetravalent linking group having at least one group selected from -O- and -NH-, and R is a hydrocarbon group having 1 to 60 carbon atoms, provided that when a plurality of Y's and R's are present in the molecule, they may be either the same or different.

In the general formula (1), preferably, Y is -Y'-, -Y'-C(=O)-, -C(=O)-Y'-, -Y'-C(=O)-Y'-, -Y'-R'-, -Y'-R'-Y'-, -Y'-R'-Y'-C(=O)-, -Y'-R'-C(=O)-Y'-, -Y'-R'-Y'-C(=O)-Y'-, or -Y'-R'-Y'-R'-, Y 'is a direct bond, -O- or -NH-, and R' is $-(CH_2)_m-$ (m is an integer of 1 to 5) or $-C_6H_6-$ (a phenylene group).

As the monomer represented by the general formula (1), for example, methyl (meth)acrylate, ethyl (meth) acrylate, butyl (meth)acrylate, hexyl (meth)acrylate, octyl (meth)acrylate, decyl (meth)acrylate, lauryl (meth)acrylate, tetradecyl (meth)acrylate, cetyl (meth)acrylate, stearyl (meth)acrylate, icosyl (meth)acrylate, and behenyl (meth)acrylate can be preferably used, and (meth)acrylates having a cyclic hydrocarbon group as described in paragraphs [0027] to [0030] of JP 2019-26746 A can also be used, and examples thereof include cyclohexyl (meth)acrylate, t-butylcyclohexyl (meth)acrylate, benzyl (meth)acrylate, and isoboronyl (meth)acrylate.

In addition, an "$\alpha$-substituted acrylate" as disclosed in JP 2017-66325 A can be preferably used. For example, butyl $\alpha$-chloroacrylate, lauryl $\alpha$-chloroacrylate, stearyl $\alpha$-chloroacrylate, icosyl $\alpha$-chloroacrylate, behenyl $\alpha$-chloroacrylate, methyl $\alpha$-cyanoacrylate, ethyl $\alpha$-cyanoacrylate, butyl $\alpha$-cyanoacrylate, octyl $\alpha$-cyanoacrylate, lauryl $\alpha$-cyanoacrylate, stearyl $\alpha$-cyanoacrylate, icosyl $\alpha$-cyanoacrylate, and behenyl $\alpha$-cyanoacrylate can be preferably used.

Furthermore, among "amide group-containing monomers" as disclosed in WO 2019/026593 A and JP 2019-26747 A, acrylic monomers can be used. For example, lauric acid amidoethyl (meth)acrylate, myristic acid amidoethyl (meth)acrylate, palmitic acid amidoethyl (meth)acrylate, stearic acid amidoethyl (meth)acrylate, behenic acid amidoethyl (meth)acrylate, lauryl (meth)acrylamide, cetyl (meth)acrylamide, stearyl (meth)acrylamide, and behenyl (meth)acrylamide can be preferably used.

In addition, "urethane group or urea group-containing monomer" as disclosed in JP 2019-26746 A or JP 2018-506657 A can be used. For example, a compound obtained by reacting hydroxyalkyl (meth)acrylate or hydroxyalkyl (meth)acrylamide with alkyl isocyanate (for example, butyl isocyanate, lauryl isocyanate, myristyl isocyanate, cetyl isocyanate, stearyl isocyanate, or behenyl isocyanate), or a compound obtained by reacting (meth)acrylate (for example, 2-methacryloyloxyethyl methacrylate) having an isocyanate group in a side chain with alkylamine (for example, butylamine, laurylamine, myristyl amine, cetyl amine, stearyl amine, or behenyl amine) or alkyl alcohol (for example, butyl alcohol, lauryl alcohol, myristyl alcohol, cetyl alcohol, stearyl alcohol, or behenyl alcohol) can be preferably used.

As the monomer represented by the general formula (1), a "monomer derived from itaconic acid" as disclosed in WO 2016/178429 A can be used, and for example, dimethyl itaconate, distearyl itaconate, and the like can be preferably used.

As a monomer other than the monomer represented by the general formula (1), monomers as described in paragraphs [0016] to [0034] of JP 2017-538793 A can be used, and for example, sorbitan tristearate methacrylate (described in paragraph [0077]), sorbitan tristearate urethane methacrylate (described in paragraph [0078]), a sorbitan tristearate urethane styrene monomer (described in paragraph [0079]), and sorbitan trioleate methacrylate (described in paragraph [0080]) can be preferably used.

As a monomer other than the monomer represented by the general formula (1), a "sulfonamide group-containing monomer" as disclosed in JP 2021-014482 A can be used, and a compound represented by the following general formula (2) can be preferably used.

$$CH_2=CA^1-C(=O)-O-R^1-A^2-R^2 ... \qquad (2)$$

wherein:

$A^1$ is a hydrogen atom, a methyl group, a chlorine atom, a bromine atom or an iodine atom,
$A^2$ is $-NH-SO_2-$ or $-SO_2-NH-$,
$R^1$ is a hydrocarbon group having 1 to 5 carbon atoms, and
$R^2$ is a hydrocarbon group having 1 to 60 carbon atoms.

For example, a compound represented by the following general formula (3) can be preferably used.

$$CH_2=CHC(=O)OC_2H_4NHSO_2C_{18}H_{37} \dots \qquad (3)$$

As a monomer other than those represented by the general formulae (1) to (2), among "amide group-containing monomers" as disclosed in WO 2019/026593 A, monomers other than acrylic monomers can be used. For example, palmitic acid amidoethyl vinyl ether, stearic acid amidoethyl vinyl ether, palmitic acid amidoethyl allyl ether, and stearic acid amidoethyl allyl ether can be preferably used.

As a monomer other than those represented by the general formulae (1) to (2), a "carbonate group-containing monomer" can be used, and for example, allyl methyl carbonate, allyl ethyl carbonate, and allyl phenyl carbonate can be preferably used.

As a monomer other than those represented by the general formulae (1) to (2), a "vinyl ester monomer" can be used, and examples thereof include vinyl acetate, vinyl butyrate, vinyl pivalate, vinyl caproate, vinyl caprylate, vinyl laurate, vinyl stearate, vinyl benzoate, and vinyl chloroacetate.

As a monomer other than those represented by the general formulae (1) to (2), an "olefin-based monomer" can be used, and examples thereof include propylene, 1-butene, 3-methyl-1-butene, 3-methyl-1-pentene, 4-methyl-1-pentene, 1-hexene, 1-octene, 1-octadecene, styrene, and $\alpha$-methylstyrene.

As a monomer other than those represented by the general formulae (1) to (2), a "silicone-based monomer" can be used, and for example, a monomer having a hydrocarbon group having 1 to 60 carbon atoms and having an unsaturated group such as a vinyl group or a (meth)acrylic group at a terminal and/or in a side chain can be used. Specific examples thereof include one-terminal (meth)acryl-modified silicone and both terminals (meth)acryl-modified silicone.

The unsaturated monomer having a hydrocarbon group having 1 to 60 carbon atoms may be used singly, or two or more thereof may be used in combination.

In the non-fluorinated compound of the present invention, the content ratio of the unsaturated monomer having a hydrocarbon group having 1 to 60 carbon atoms is only required to be 30% by mass or more based on the total amount (excluding the mass of the neutralizing agent) of the monomer components constituting the non-fluorinated compound, but from the viewpoint of more suitably exhibiting the effect of the present invention, the content ratio is preferably 30 to 99.5% by mass, more preferably 40 to 99% by mass, still more preferably 45 to 97% by mass, and most preferably 50 to 96% by mass.

Examples of the unsaturated monomer having an acidic functional group that can be used in the present invention include (meth)acrylic acid, crotonic acid, maleic acid, fumaric acid, itaconic acid, citraconic acid, vinylsulfonic acid, (meth)allylsulfonic acid, vinylbenzene sulfonic acid, acrylamide tertiary butyl sulfonic acid, 2-acrylamido-2-methylpropane sulfonic acid, 2-methacrylamido-2-ethylpropane sulfonic acid, 2-acrylamidobutane sulfonic acid, and 2-(meth)acryloyloxyethyl acid phosphate.

In the non-fluorinated compound of the present invention, the content ratio of the unsaturated monomer having an acidic functional group may be 0.5% by mass or more based on the total amount (excluding the mass of the neutralizing agent) of the monomer components constituting the non-fluorinated compound, but from the viewpoint of more suitably exhibiting the effect of the present invention, the content ratio is preferably 1 to 60% by mass, more preferably 3 to 55% by mass, and still more preferably 4 to 50% by mass.

The non-fluorinated compound of the present invention may contain a constitutional unit derived from an unsaturated monomer having a nonionic functional group in addition to the unsaturated monomer having a hydrocarbon group having 1 to 60 carbon atoms and the unsaturated monomer having an acidic functional group.

Specific examples of the nonionic functional group include a hydroxy group, a phenolic hydroxy group, a nitrile group, an amide group, a (thio)urethane group, a (thio)urea group, a (thio)carbonate group, and an ester group.

Among the unsaturated monomers having a nonionic functional group, specific examples of the monomer having a hydroxy group include acrylic monomers such as 2-hydroxymethyl (meth)acrylate, 2-hydroxyethyl (meth)acrylate, 2-hydroxypropyl (meth)acrylate, 2-hydroxybutyl (meth)acrylate, 4-hydroxybutyl (meth)acrylate, 2-hydroxy-3-chloropropyl (meth)acrylate, 2-hydroxy-3-phenoxypropyl (meth)acrylate, 2-hydroxy-3-allyloxypropyl (meth)acrylate, 2-(meth)acryloyloxyethyl-2-hydroxyethyl-phthalic acid, glycerin mono(meth)acrylate, polyethylene glycol mono(meth)acrylate, polypropylene glycol mono(meth)acrylate, N-(hydroxymethyl)(meth)acrylamide, and N-(2-hydroxyethyl)(meth)acrylamide; allyl-based monomers such as allyl alcohol, 3-allyloxy-1,2-propanediol, ethylene glycol monoallyl ether, and triallyl citrate; and vinyl-based monomers such as 2-hydroxyethyl vinyl ether and 4-hydroxybutyl vinyl ether.

Among the unsaturated monomers having a nonionic functional group, specific examples of the monomer having a phenolic hydroxy group include 4-hydroxyphenyl (meth)acrylate, N-(4-hydroxyphenyl)(meth)acrylamide, 2-(2,3-dihydroxy-phenoxy)ethyl (meth)acrylate, $\omega$-(2,3-dihydroxy-phenoxy)polyethylene glycol (meth)acrylate, 2-(2,3-dihydroxy-phenoxycarbonylamino)ethyl (meth)acrylate, and $\omega$-(2,3-dihydroxy-phenoxycarbonylamino)polyethylene glycol (meth)acrylate.

Among the unsaturated monomers having a nonionic functional group, specific examples of the monomer having a nitrile group include (meth)acrylonitrile, 2-ethylpropenenitrile, 2-propylpropenenitrile, 2-chloropropenenitrile, and 2-butenenitrile.

Among the unsaturated monomers having a nonionic functional group, the monomer having an amide group is not particularly limited as long as it has an amide group in the structure thereof, but does not have a monovalent hydrocarbon group having 1 to 60 carbon atoms. Specific examples thereof include (meth)acrylamide, N,N'-methylenebis(meth)acrylamide, diacetone(meth)acrylamide, N-vinyl-2-caprolactam having a cyclic structure, and N-vinyl-2-pyrrolidone.

Among the unsaturated monomers having a nonionic functional group, the monomer having a (thio)urethane group is not particularly limited as long as it has a (thio)urethane group in the structure thereof, but it does not have a monovalent hydrocarbon group having 1 to 60 carbon atoms. Examples of commercially available products thereof include urethane acrylate AH-600 (manufactured by Kyoeisha Chemical Co., Ltd.: phenyl glycidyl ether acrylate hexamethylene diisocyanate urethane prepolymer), urethane acrylate UA-306H (pentaerythritol triacrylate hexamethylene diisocyanate urethane prepolymer manufactured by Kyoeisha Chemical Co., Ltd.), urethane acrylate UA-306T (pentaerythritol triacrylate toluene diisocyanate urethane prepolymer manufactured by Kyoeisha Chemical Co., Ltd.), urethane acrylate UA-306I (pentaerythritol triacrylate isophorone diisocyanate urethane prepolymer manufactured by Kyoeisha Chemical Co., Ltd.), and urethane acrylate UA-510H (dipentaerythritol pentaacrylate hexamethylene diisocyanate urethane prepolymer manufactured by Kyoeisha Chemical Co., Ltd.).

Among the unsaturated monomers having a nonionic functional group, the monomer having a (thio)urea group is not particularly limited as long as it has a (thio)urea group in the structure thereof, but does not have a monovalent hydrocarbon group having 1 to 60 carbon atoms. Examples thereof include 2-(2-oxoimidazolidin-1-yl)ethyl (meth)acrylate.

Among the unsaturated monomers having a nonionic functional group, the monomer having a (thio)carbonate group is not particularly limited as long as it has (thio)carbonate in the structure thereof, but does not have a monovalent hydrocarbon group having 1 to 60 carbon atoms. Examples thereof include (2-oxo-1,3-dioxolan-4-yl)methyl methacrylate.

Among the unsaturated monomers having a nonionic functional group, the monomer having an ester group is not particularly limited as long as it has an ester group in the structure thereof, but does not have a monovalent hydrocarbon group having 1 to 60 carbon atoms. Examples thereof include 1,6-hexanediol di(meth)acrylate, 1,9-nonanediol di(meth)acrylate, 1,10-decanediol di(meth)acrylate, neopentyl glycol di(meth)acrylate, diethylene glycol di(meth)acrylate, triethylene glycol di(meth)acrylate, polyethylene glycol di(meth)acrylate, polypropylene glycol di(meth)acrylate, tricyclodecanedimethanol di(meth)acrylate, ethoxylated bisphenol A di(meth)acrylate, and γ-butyrolactone (meth)acrylate as that having a cyclic structure.

In addition, a monomer having two or more of these nonionic functional groups in the structure thereof may be used, and examples thereof include a monomer having a carbonate group, a urethane group, and an ester group obtained by reacting a polycarbonate diol, a diisocyanate, and a hydroxyalkyl (meth)acrylate.

The content ratio of the unsaturated monomer having a nonionic functional group in the molecule is preferably 0.1 to 69.5% by mass, more preferably 1 to 60% by mass, and still more preferably 3 to 50% by mass based on the total amount (excluding the mass of the neutralizing agent) of the monomer components constituting the non-fluorinated compound. When used in this range, oil-proof properties can be further enhanced.

It is noted that, in the non-fluorinated oil-proof agent composition of the present invention, from the viewpoint of oil-proof properties, when the non-fluorinated compound is a copolymer containing constitutional units derived from an unsaturated monomer having a hydrocarbon group having 1 to 60 carbon atoms, an unsaturated monomer having an acidic functional group, and an unsaturated monomer having a nonionic functional group, and the unsaturated monomer having a nonionic functional group is an unsaturated monomer having a hydroxy group as a nonionic functional group, a mass ratio of the unsaturated monomer having a hydroxy group to the unsaturated monomer having an acidic functional group (the unsaturated monomer having a hydroxy group/the unsaturated monomer having an acidic functional group) is adjusted to 2.6 or less. As described above, in the present invention, that mass ratio is calculated using the mass of the unsaturated monomer having an acidic functional group that is not neutralized as the "mass of the unsaturated monomer having an acidic functional group", regardless of the presence or absence of neutralization of the acidic functional group.

The non-fluorinated compound of the present invention may contain an unsaturated monomer other than the unsaturated monomer having a hydrocarbon group having 1 to 60 carbon atoms, the unsaturated monomer having an acidic functional group, and the unsaturated monomer having a nonionic functional group.

Examples of such other unsaturated monomers include ethylene, vinyl chloride, vinylidene chloride, allylamine, diallylamine, vinyl-modified silica, and (meth)acryl-modified silica. These monomers may be used singly, or two or more of them may be used in combination.

The non-fluorinated compound is preferably in the form of being dissolved or dispersed in a medium such as water or an organic solvent because the non-fluorinated compound is easily treated onto a substrate in such a form. Incidentally, the state (solid or liquid) of the dispersoid may differ or may be difficult to specify depending on the temperature (production temperature or storage temperature) of the oil-proof agent composition due to the influence of the physical properties (solubility, melting point, etc.) of the non-fluorinated compound as the dispersoid, and thus the emulsified state, the suspended state, and the like are not clearly distinguished regarding "disperse", "emulsify", and their similar expressions in the present description unless otherwise specified.

Examples of the medium include water; aliphatic alcohols such as methanol, ethanol, isopropyl alcohol, isobutyl alcohol, hexyl alcohol, and 2-ethylhexyl alcohol; ketones such as acetone, methyl ethyl ketone, methyl isobutyl ketone, diisobutyl ketone, cyclohexanone, and diacetone alcohol; esters such as ethyl acetate, methyl acetate, butyl acetate, methyl lactate, and ethyl lactate; ethers such as diethyl ether, diisopropyl ether, methyl cellosolve, ethyl cellosolve, dioxane, and methyl tert-butyl ether; glycols such as ethylene glycol, diethylene glycol, triethylene glycol, propylene glycol, and dipropylene glycol; glycol ethers such as ethylene glycol monobutyl ether, diethylene glycol monobutyl ether, diethylene glycol monomethyl ether, triethylene glycol monomethyl ether, propylene glycol monomethyl ether, and 3-methoxy-3-methyl-1-butanol; glycol esters such as ethylene glycol monomethyl ether acetate, propylene glycol monomethyl ether acetate, and diethylene glycol monoethyl ether acetate; and amides such as formamide, acetamide, benzamide, N,N-dimethylformamide, and acetanilide, and one of these amides may be used singly or two or more thereof may be used in combination. Although not particularly limited, water is preferably used as a main component from the viewpoint of work safety and environmental load at the time of treatment of the substrate. When it is not possible to provide a sufficient drying temperature and time from the viewpoint of specifications of the production apparatus or damage to a base, an organic solvent having high volatility such as ethanol may be used as a main component.

The non-fluorinated compound can be dissolved or dispersed in a medium by a known method. For example, devices such as a homomixer, a homogenizer, a high-pressure homogenizer, and an ultrasonic homogenizer can be used. In addition, the non-fluorinated compound can be self-dispersed, but a surfactant may be added as a dispersant.

The content of the dispersant may be appropriately selected in consideration of oil-proof properties and dispersion stability of the oil-proof agent composition. For example, the content of the dispersant is preferably 0.01 to 40 parts by mass, more preferably 0.1 to 30 parts by mass, still more preferably 0.3 to 20 parts by mass, and most preferably 0.5 to 15 parts by mass in terms of solid content per 100 parts by mass of the non-fluorinated compound.

As the dispersant, a known dispersant can be used, and examples thereof include an anionic surfactant, a nonionic surfactant, a cationic surfactant, and an amphoteric surfactant, and a single dispersant may be used, or alternatively, two or more dispersants may be used in combination.

As the anionic surfactant, for example, various fatty acid salts, alkylbenzene sulfonic acid salts, alkane sulfonic acid salts, alkyl sulfate salts, alkyl phosphate ester salts, polyoxyethylene alkyl ether sulfates, polyoxyethylene-substituted phenyl ether sulfates, and polycarboxylic acid salts can be used, and examples of the counter ion include, but are not limited to, sodium, potassium, calcium, ammonium, and triethanolamine.

Examples of the nonionic surfactant include, but are not limited to, fatty acid esters such as various higher fatty acid glycerins, polyoxyethylene alkyl ethers, polyoxypropylene alkyl ethers, polyoxyethylene fatty acid esters, fatty acid alkanolamides, alkyl glucosides, higher alcohols, Pluronic emulsifiers, and alkyldimethylamine-N-oxides.

As the cationic surfactant, for example, quaternary amines such as alkyltrimethylammonium salts, alkyldimethylbenzylammonium salts, dialkyldimethylammonium salts, alkylpyridinium chloride salts, and quaternized products of polyoxyethylene alkylamines as well as an amine salt prepared by neutralizing an amine with an appropriate acid such as alkylamine salts, alkyldimethylamine salts, and polyoxyethylenealkylamine salts can be used. Examples of the counter ion include, but are not limited to, a chlorine ion, a bromine ion, a sulfate ion, a formate ion, an acetate ion, a methyl sulfate ion, and an ethyl sulfate ion.

Examples of the amphoteric surfactant include, but are not limited to, an alkylbetaine-type amphoteric surfactant, an amidobetaine-type amphoteric surfactant, a sulfobetaine-type amphoteric surfactant, a phosphobetaine-type amphoteric surfactant, an imidazolinium betaine-type amphoteric surfactant, an alkylamine oxide-type amphoteric surfactant, an amino acid-type amphoteric surfactant, and a phosphoric acid ester-type amphoteric surfactant.

The polymer compound-type non-fluorinated compound can be produced by copolymerizing the above-described monomers using various polymerization methods (radical polymerization, cationic polymerization, anionic polymerization) such as known bulk polymerization, solution polymerization, emulsion polymerization, suspension polymerization, and radiation polymerization. Examples of the emulsion polymerization method include a monomer one time-charging method of charging a monomer all at once and a monomer dropping method of continuously dropping a monomer. Polymerization can also be performed after mechanical treatment with a high-pressure homogenizer or the like. In addition, when solution polymerization is employed, for example, after the polymerization, water is added and then the solvent is removed, whereby the copolymer can be dispersed in water. It is not always necessary to add a dispersant, and a self-dispersion liquid can be produced.

The dispersant that can be used during the polymerization is not particularly limited, and examples thereof include the anionic surfactant, the nonionic surfactant, the cationic surfactant, the amphoteric surfactant, and further include reactive surfactants (a reactive anionic surfactant, a reactive nonionic surfactant, a reactive cationic surfactant, and a reactive amphoteric surfactant that are reactive with the monomers described above). These may be used singly or two or more thereof may be used in combination.

Examples of the reactive surfactant include polyethylene glycol mono (meth)acrylate, polyoxyethylene alkylphenyl ether (meth)acrylate, ammonium 2-(meth)acryloyloxyethylsulfonate, monomaleic acid esters of polyethylene glycol and derivatives thereof, and (meth)acryloyl polyoxyalkylene alkyl ether phosphoric acid esters varying in molecular weight (differing in the number of moles of added EO), and reactive surfactants such as those described in paragraphs [0074] to [0094] of JP 2017-155095 A.

As the polymerization initiator, a known polymerization initiator such as an azo polymerization initiator, a peroxide polymerization initiator, or a redox polymerization initiator can be appropriately used. The content of the polymerization initiator is, for example, preferably 0.01 to 10 parts by mass, more preferably 5 parts by mass or less, and particularly preferably 2 parts by mass or less, per 100 parts by mass of all the monomers constituting the non-fluorinated compound. In addition, an acidic functional group can be introduced into the polymer by using ammonium persulfate, sodium persulfate, or the like.

In the polymerization reaction, a chain transfer agent such as dodecyl mercaptan, t-butyl alcohol, or thioglycolic acid or a polymerization inhibitor may be used for the purpose of adjusting the molecular weight.

In addition, by using a polymer compound (including an oligomer) having a mercapto group, a structure derived from the polymer compound can be introduced into a non-fluorine compound to produce a block copolymer or a graft copolymer. Examples of such a polymer compound include mercapto-modified silicone and mercapto-amino-modified silicone.

The temperature of the polymerization reaction may be appropriately selected, and is preferably, for example, 20°C to 150°C.

In the polymerization reaction, the weight average molecular weight of the resulting non-fluorinated compound can be adjusted by increasing or decreasing the amounts of the polymerization initiator, the chain transfer agent, and the polymerization inhibitor used and the polymerization temperature described above.

The monomer concentration during the polymerization is preferably 10 to 70% by mass, and more preferably 15 to 60% by mass from the viewpoint of reaction control and handleability.

When an organic solvent is used in the production of the oil-proof agent composition, a removing step may be provided, as necessary, and examples thereof include a method of heating under normal pressure or reduced pressure.

To reduce unreacted monomers, unreacted polymerization initiators, and the like in the dispersion of the non-fluorinated oil-proof agent composition used in the present invention, it is preferable to perform an operation of removing residual monomers, residual polymerization initiators, and the like, as necessary.

Specifically, examples of a method for removing the residual monomer from the polymerization system include a method of passing steam through a tank containing an acrylic resin emulsion is used; and a so-called steam stripping method involving bringing an acrylic resin emulsion and steam into countercurrent contact in a multistage tower.

The non-fluorinated oil-proof agent composition of the present invention may be used as it is as a treatment liquid or as a stock solution, and the solid concentration may be appropriately chosen according to the treating method, handleability, and so on. For example, the solid concentration is preferably about 0.01 to 70% by mass, more preferably about 0.5 to 60% by mass, particularly preferably about 0.7 to 50% by mass, and most preferably about 0.9 to 40% by mass.

An additive and the like may be added to the non-fluorinated oil-proof agent composition of the present invention, as necessary. Examples of the additive include other oil-proof agents, water repellents, paper strength agents, sizing agents, pigments, penetrants, defoamers, pH adjusters, antibacterial agents, antifungal agents, colorants, antioxidants, deodorants, organic solvents, chelating agents, antistatic agents, catalysts, crosslinking agents, antibacterial deodorants, flame retardants, softeners, and wrinkle inhibitors.

Examples of the defoamers include fats-and-oils-based defoamers such as castor oil, sesame oil, linseed oil, and animal and vegetable oils; fatty acid-based defoamers such as stearic acid, oleic acid, and palmitic acid; fatty acid ester-based defoamers such as isoamyl stearate, distearyl succinate, ethylene glycol distearate, and butyl stearate; alcohol-based defoamers such as polyoxyalkylene monohydric alcohol di-t-amylphenoxyethanol, 3-heptanol, and 2-ethylhexanol; ether-based defoamers such as di-t-amylphenoxyethanol 3-heptyl cellosolve nonyl cellosolve 3-heptylcarbitol; phosphoric acid-based ester-based defoamers such as tributyl phosphate and tris(butoxyethyl) phosphate; amine-based defoamers such as diamylamine; amide defoamers such as polyalkylene amide and acylate polyamine; sulfuric acid ester-based defoamers such as sodium lauryl sulfate; and mineral oils. The defoamers may be used singly or two or more of them may be used in combination.

As an antistatic agent, one that hardly inhibits oil-proof properties is preferably used. Examples of the antistatic agent include anionic antistatic agents such as higher alcohol sulfuric acid ester salts, sulfated oils, and sulfonate salts, cationic antistatic agents such as quaternary ammonium salts and imidazoline-type quaternary salts, nonionic antistatic agents such as polyethylene glycol type and polyhydric alcohol ester type, amphoteric antistatic agents such as imidazoline quaternary salts, alanine type, and betaine type, polymer compound type antistatic polymers, and polyalkylamines. The antistatic agents may be used singly or two or more of them may be used in combination.

Superior oil-proof properties can be imparted by attaching the non-fluorinated oil-proof agent composition of the present invention to a substrate and drying the composition. When the substrate is paper, extremely superior air permeability is exhibited in addition to oil-proof properties. That is, in the oil-proof product of the present invention, the above-described non-fluorinated compound is present on at least one of a surface and the interior part of the substrate. As will be described later, the oil-proof paper of the present invention is oil-proof paper containing the above-described non-fluorinated compound, and is preferably an oil-proof paper a plane portion of which has a kit value measured in accordance with the provision of TAPPI UM-557 of 1 to 6.

<Oil-proof paper>

(Paper substrate)

The paper substrate used for the oil-proof paper of the present invention is not particularly limited, and paper substrates used for known oil-proof papers can be used. Examples of the paper substrate include non-coated paper and coated paper.

Examples of the non-coated paper include paper made by using a single type of pulp alone or mixing two or more types of pulps at an arbitrary blending ratio.

Examples of the pulp include needle bleached kraft pulp (NBKP), leaf bleached kraft pulp (LBKP), ground pulp (GP), thermomechanical pulp (TMP), chemi-thermomechanical pulp (CTMP), and deinked pulp (DIP).

The pulp is preferably one having a Canadian standard freeness (CSF) adjusted to 350 to 550 mL. When the CSF of the pulp is 350 mL or more, oil-proof properties are likely to be developed. When the CSF of the pulp is 550 mL or less, paper strength is sufficient. The CSF of the pulp can be adjusted by beating the pulp. When two or more types of pulps are used, the CSF may be adjusted by mixing pulps separately beaten, or the CSF may be adjusted by beating pulps mixed in advance.

The paper substrate may contain a filler. Examples of the filler include a filler used for ordinary papermaking. Examples of the filler include inorganic fillers such as kaolin, calcined kaolin, delaminated kaolin, illite, heavy calcium carbonate, light calcium carbonate, light calcium carbonate-silica composite, magnesium carbonate, barium carbonate, titanium dioxide, zinc oxide, silicon oxide, amorphous silica, aluminum hydroxide, calcium hydroxide, and magnesium hydroxide. Only a single type of filler may be used, or two or more types of fillers may be mixed and used.

The paper substrate may be non-size paper, may be internally added with a sizing agent, or may be externally added with a sizing agent.

Examples of the sizing agent include rosin-based sizing agents, rosin emulsion-based sizing agents, and α-carboxymethyl saturated fatty acids in the case of acidic papermaking. In the case of neutral papermaking, examples of the sizing agent include rosin-based sizing agents for neutral papermaking, alkyl ketene dimers, alkenyl succinic anhydride, and cationic polymer-based sizing agents. The added amount of the sizing agent is not particularly limited. In the external addition using a size press or the like, a surface sizing agent (rosin-based sizing agents, synthetic resin-based sizing agents, and the like) may be used.

From the viewpoint of improving the oil-proof properties of the oil-proof paper of the present invention, the paper substrate preferably contains a cationic polymer.

Examples of the cationic polymer include cationic paper strength enhancers used in ordinary papermaking. Examples of the cationic polymer specifically include a polyamine epichlorohydrin resin, a polyamide epichlorohydrin resin, cationized starch, cationic polyacrylamides (an acrylamide-allylamine copolymer, an acrylamide-dimethylaminoethyl (meth)acrylate copolymer, an acrylamide-diethylaminoethyl (meth)acrylate copolymer, an acrylamide-quaternized dimethylaminoethyl (meth)acrylate copolymer, an acrylamide -quaternized diethylaminoethyl (meth)acrylate copolymer, etc.), cationically modified polyvinyl alcohol, polydiallyldimethylammonium chloride, polyallylamine, polyvinylamine, polyethyleneimine, an N-vinylformamide-vinylamine copolymer, a melamine resin, and a polyamide epoxy-based resin.

As the cationic polymer, a polyamine epichlorohydrin resin, a polyamide epichlorohydrin resin, cationized starch, cationic polyacrylamide, polyethyleneimine, and the like are preferable from the viewpoint of superior oil-proof properties of the resulting oil-proof paper. Only a single type of cationic polymer may be used, or two or more types of cationic polymers may be mixed and used.

The content of the cationic polymer contained in the paper substrate preferably satisfies the relationship of the following formula (I), and more preferably satisfies the relationship of the following formula (II).

$$1 \leq D \times (C/100) \leq 120 \ ... \ (I)$$

$$3 \leq D \times (C/100) \leq 60 \ ... \ (II)$$

where D is the cationic charge density ($\mu$eq/g) of the cationic polymer, and C is the content ratio (% by mass) of the cationic polymer to the pulp (100% by mass) constituting the paper substrate.

$D \times (C/100)$ ($\mu$eq/g) is an indicator of cationization of the paper substrate. When $D \times (C/100)$ is equal to or more than the lower limit value of the above range, the cationicity of the paper substrate is sufficiently high, and the non-fluorinated compound is more sufficiently fixed to a surface of the paper substrate. Therefore, the resulting oil-proof paper is further superior in oil-proof properties. When $D \times (C/100)$ is equal to or less than the upper limit value of the above range, the fixability of the non-fluorinated compound is sufficient, and a large amount of cationic polymer is not required, so that the production cost of the oil-proof paper can be reduced.

The paper substrate may contain a combination agent other than the filler, the sizing agent, and the cationic polymer as long as the effect of the present invention is not impaired. Examples of such other combination agents include a fixing agent, a dry paper strength agent, a wet paper strength agent, a sulfuric acid band, a yield improver, a dye, and a pigment. The other combination agents may be used singly or two or more thereof may be used in combination.

The paper substrate can be appropriately produced by a known paper machine. The papermaking conditions are not particularly limited. Examples of the paper machine include a Fourdrinier paper machine, a twin-wire paper machine, and a cylinder paper machine.

In the present invention, coated paper in which a pigment coating layer is provided on at least one surface of the paper substrate can also be used as the paper substrate.

As the paper substrate, one subjected to calendering treatment can also be used.

<Method for producing oil-proof paper>

As a method for treating the non-fluorinated oil-proof agent composition of the present invention on a paper substrate, known methods such as coating, size pressing, and internal addition to pulp slurry can be employed, and methods similar to coating and size pressing are particularly preferable.

The treatment amount of the non-fluorinated oil-proof agent composition of the present invention is not particularly limited, but from the viewpoint of oil-proof properties, for example, the existence amount (attachment amount) of the non-fluorinated compound to the paper substrate is preferably about 0.5 to 30 g/m$^2$, more preferably about 1 to 20 g/m$^2$, still more preferably about 1.5 to 15 g/m$^2$, and particularly preferably about 2 to 10 g/m$^2$. The existence amount is preferably 15 g/m$^2$ or less from the viewpoint of air permeability, dry load after treatment, and cost.

The oil-proof paper of the present invention can be said to have oil-proof properties when the kit value of a plane portion of the oil-proof paper measured in accordance with the provision of TAPPI UM-557 is 1 or more. Although depending on required performance in use, the kit value is preferably 1 or more, more preferably 2 or more, still more preferably 3 or more, and particularly preferably 4 or more for the purpose of reducing permeation of oil to the opposite side when, for example, a food is wrapped with the oil-proof paper.

The oil-proof paper of the present invention may have water resistance according to the required performance such as printability, and it can be said that the oil-proof paper has water resistance when the Stöckigt sizing measured in accordance with JIS P-8122: 2004 is 2 seconds or more. The Stöckigt sizing is preferably 5 seconds or more, and more preferably 10 to 500 seconds.

The oil-proof paper of the present invention preferably has a Gurley air permeance measured in accordance with JIS P 8117: 2009 of 1000 seconds or less, more preferably 500 seconds or less, and particularly preferably 100 seconds or less. When the Gurley air permeance of the oil-proof paper exceeds 1000 seconds, there is a possible risk that the flavor and preservability when food is wrapped with the oil-proof paper will be deteriorated.

The method for treating the paper substrate with the non-fluorinated oil-proof agent composition can be performed by a method using a known coating machine. Examples of the coating machine include a size press, a coater, and a printing machine. Examples of the size press include a two-roll size press, a film transfer size press, and a calender size press. Examples of the coater include a roll coater, an air knife coater, a slot die coater, a gear-in-die coater, a blade coater, a rod blade coater, a bill blade coater, a short-dwell blade coater, a bar coater, a curtain coater, a direct gravure coater, and an offset gravure coater. Examples of the printing machine include a gravure printing machine, a flexographic printing machine, and an offset printing machine.

A drying step may be provided after the non-fluorinated oil-proof agent composition is attached to the paper substrate. The drying may be performed by natural drying, but is preferably performed by heating. For example, the general drying temperature in the case of using the known coating machine described above is preferably lower than 120°C, more preferably 80 to 110°C, and still more preferably 90 to 110°C.

A calendering step may be provided after the non-fluorinated oil-proof agent composition is attached to the paper substrate. Examples of the calendar include a super calendar and a soft calendar.

The oil-proof paper of the present invention can be suitably produced by the production method described above.

In the present invention, it is also possible to produce an oil-proof product by treating a film, a fiber, a woven or knitted fabric, a nonwoven fabric or the like other than paper as a substrate with the non-fluorinated oil-proof agent composition of the present invention.

Examples

Hereinafter, mainly oil-proof paper using the non-fluorinated oil-proof agent composition of the present invention will be specifically described, but the present invention is not limited to these Examples. In the Examples, "parts" and "%" represent "parts by mass" and "% by mass", respectively, unless otherwise specified.

[Oil-proof property test]

<TAPPI KIT method>

In accordance with the provisions of TAPPI UM-557, one drop of each of the test liquids differing in the mixing ratio of castor oil, toluene, and n-heptane (the mixing ratios are given in Table 1 with Kit Nos.) was dropped onto a surface of the oil-proof paper, and after 15 seconds, the change in color of the surface of the oil-proof paper due to permeation of the test liquids was visually evaluated. The test result is expressed by the Kit number (kit value) of the test liquid having the largest number among the test liquids with which the color of the surface does not become dark. The larger the number, the better the oil-proof properties.

[Table 1]

| Kit No. | Mixing ratio (% by volume) | | |
|---|---|---|---|
| | Castor oil | Toluene | n-Heptane |
| 1 | 100 | 0 | 0 |
| 2 | 90 | 5 | 5 |
| 3 | 80 | 10 | 10 |
| 4 | 70 | 15 | 15 |
| 5 | 60 | 20 | 20 |
| 6 | 50 | 25 | 25 |
| 7 | 40 | 30 | 30 |
| 8 | 30 | 35 | 35 |
| 9 | 20 | 40 | 40 |
| 10 | 10 | 45 | 45 |
| 11 | 0 | 50 | 50 |
| 12 | 0 | 45 | 55 |

A paper sample (2.5 cm × 3.5 cm) was cut from the oil-proof paper, and the oil resistance of the oil-proof agent-coated plane portion of the oil-proof paper was measured according to the above criteria.

<Method of testing water resistance>

For the water resistance of the oil-proof paper, the Stöckigt sizing was evaluated in accordance with the provision of JIS P 8122: 2004.

<Production of oil-proof paper>

The paper substrates listed below were each treated with an oil-proof agent composition to produce oil-proof papers of Examples 1 to 37 and Comparative Examples 1 to 14. Thereafter, the oil-proof property test described above was performed for each oil-proof paper.

(Paper substrate)

· Base paper A (without addition of chemical agents)

As raw pulps, LBKP (leaf bleached kraft pulp) and NBKP (needle bleached kraft pulp) were used. LBKP and NBKP were mixed at 70 : 30 (mass ratio), and beaten with a beating machine such that the CSF was 440 mL, affording a pulp slurry, and then paper was made such that the basis weight was 40 g/m², affording a paper substrate having a basis weight of 40 g/m². The resulting paper substrate had a Stöckigt size of 0 seconds. The air permeance was 2 seconds.

· Base paper B (with addition of wet paper strength enhancer)

As raw pulps, LBKP (leaf bleached kraft pulp) and NBKP (needle bleached kraft pulp) were used. LBKP and NBKP were mixed at 70 : 30 (mass ratio) and beaten with a beating machine such that the CSF was 440 mL, affording a pulp slurry. To the pulp slurry was added a wet paper strength enhancer (trade name: "FW-7281" manufactured by SEIKO PMC Corporation, aqueous solution of polyamine epichlorohydrin resin; solid concentration: 25%) in an amount of 0.4% by mass relative to pulp (solid content), and then papermaking was performed such that the basis weight was 40 g/m², affording a paper substrate having a basis weight of 40 g/m². The resulting paper substrate had a Stöckigt size of 0 seconds. The air permeance was 2 seconds.

· Base paper C (with addition of wet paper strength enhancer and sizing agent)

As raw pulps, LBKP (leaf bleached kraft pulp) and NBKP (needle bleached kraft pulp) were used. LBKP and NBKP were mixed at 70 : 30 (mass ratio) and beaten with a beating machine such that the CSF was 440 mL, affording a pulp slurry. To the pulp slurry was added a rosin sizing agent in an amount of 1.0% by mass relative to pulp, the pH of the pulp slurry was adjusted to 5.0 with a sulfuric acid band, and a wet paper strength enhancer (trade name: "FW-7281" manufactured by SEIKO PMC Corporation, aqueous solution of polyamine epichlorohydrin resin; solid concentration: 25%) was further added in an amount of 0.4% by mass relative to pulp (solid content), and then papermaking was performed such that the basis weight was 40 g/m², affording a paper substrate having a basis weight of 40 g/m². The resulting paper substrate had a Stöckigt size of 10 seconds. The air permeance was 2 seconds.

(Treating method)

· Size pressing

As a coating machine, a two-roll size press machine was used to attach an oil-proof agent composition to a paper substrate, and the paper substrate was dried at 105°C for 1 minute using a rotary dryer. The "dry treatment amount" indicated in the table was calculated using the mass change amount (wet pickup) of the paper substrate between before and after the attachment of the oil-proof agent composition and the content of the non-fluorinated compound in the composition.

· Bar coating

An oil-proof agent composition was applied to a paper substrate using a Meyer bar, and dried at 110°C for 5 minutes in a hot air dryer. In addition, the same treatment was repeated, as necessary, and treatment was performed such that the "dry treatment amount" indicated in the table was achieved. The "dry treatment amount" indicated in the table was calculated using the mass change amount (wet pickup) of the paper substrate between before and after the attachment of the oil-proof agent composition and the content of the non-fluorinated compound in the composition.

· Method for producing non-fluorinated oil-proof agent composition

For Production Examples 1 to 23 and Comparative Production Examples 1 and 2, oil-proof agent compositions were produced by one of the following methods under the conditions indicated in the table.

(Method A)

Monomers, a polymerization initiator, a chain transfer agent, a surfactant, and a polymerization medium were added to a reaction vessel, and the mixture was stirred and heated under a nitrogen atmosphere to perform radical polymerization. Thereafter, the concentration was adjusted using ion-exchanged water so as to achieve the polymer content shown in the table, thereby affording an aqueous oil-proof agent composition.

(Method B)

Monomers, a surfactant, and a polymerization medium were mixed in a reaction vessel, and the resulting mixed liquid was treated with a high-pressure homogenizer (400 bar). Thereafter, a polymerization initiator and a chain transfer agent were added, and the mixture was stirred and heated under a nitrogen atmosphere to perform radical polymerization. Thereafter, the concentration was adjusted using ion-exchanged water so as to achieve the polymer content shown in the table, thereby affording an aqueous oil-proof agent composition.

(Method C)

Monomers, a polymerization initiator, a chain transfer agent, and a polymerization medium were added to a reaction vessel, and the mixture was stirred and heated under a nitrogen atmosphere to perform radical polymerization. Thereafter, a 4.8% aqueous solution of sodium hydroxide was added so as to achieve the degree of neutralization indicated in the table while maintaining the internal temperature, and then ion-exchanged water was appropriately added to adjust the viscosity, and then the organic solvent was distilled off. Thereafter, the concentration was adjusted using ion-exchanged water so as to achieve the polymer content shown in the table, thereby affording an aqueous oil-proof agent composition.

(Production Example 15)

Monomers, a polymerization initiator, a polymerization medium, and triethanolamine (10.8 parts) were added to a reaction vessel, and the mixture was stirred and heated under a nitrogen atmosphere to perform radical polymerization. Thereafter, the viscosity was adjusted by appropriately adding ion-exchanged water, and then the organic solvent was distilled off. Thereafter, the concentration was adjusted using ion-exchanged water so as to achieve the polymer content shown in the table, thereby affording an aqueous oil-proof agent composition.

<Abbreviations in table>

MMA: Methyl methacrylate
EA: Ethyl acrylate
BA: Butyl acrylate
BI-HEA: 2-[(Butylcarbamoyl)oxy]ethyl acrylate
*Reaction product of butyl isocyanate and 2-hydroxyethyl acrylate
EHA: 2-Ethylhexyl acrylate
LA: Lauryl acrylate
SA: Stearyl acrylate
SMA: Stearyl methacrylate
AA: Acrylic acid
MAA: Methacrylic acid
AAMPS: 2-Acrylamido-2-methylpropane sulfonic acid
AN: Acrylonitrile
HEMA: 2-Hydroxyethyl methacrylate
VP: N-Vinyl-2-pyrrolidone
APS: Ammonium persulfate
V-601: 2,2'-Azobis(dimethyl isobutyrate) (manufactured by FUJIFILM Wako Pure Chemical Corporation)
LSH: Lauryl mercaptan
ABS: Sodium dodecylbenzenesulfonate (soft type)
(NEOPELEX G-15, manufactured by Kao Corporation, solid concentration: 16%)
AES: Polyoxyalkylene alkyl ether sulfate ammonium (ELEMINOL CLS-20, manufactured by Sanyo Chemical Industries, Ltd., solid concentration: 100%)
MEK: Methyl ethyl ketone
IPA: Isopropyl alcohol
TEA: Triethanolamine

[Table 2]

| Table 2 | | Production Example 1 | Production Example 2 | Production Example 3 | Production Example 4 | Production Example 5 | Production Example 6 | Production Example 7 | Production Example 8 | Production Example 9 |
|---|---|---|---|---|---|---|---|---|---|---|
| Hydrocarbon group-containing monomer [mass%] | MMA | 16 | 42 | 4 | 6 | 16 | | | | |
| | EA | | | | 72 | | | | | |
| | BA | 51 | 53 | 51 | | | | | | |
| | BI-HEA | | | | | 51 | | | | |
| | EHA | | | | | | 95 | 80 | | |
| | LA | | | | | | | | 95 | 80 |
| | SA | | | | | | | | | |
| | SMA | | | | | | | | | |
| Acidic group-containing monomer [mass%] | AA | 5 | 5 | 5 | 4 | 5 | 5 | 20 | 5 | 20 |
| | MAA | | | | | | | | | |
| | AAMPS | | | | | | | | | |
| Nonionic functional group-containing monomer [mass%] | AN | 28 | | 40 | 16 | 28 | | | | |
| | HEMA | | | | 2 | | | | | |
| | HEMA VP | | | | | | | | | |
| Total amount of | monomers [parts] | 100.0 | 100.0 | 100.0 | 100.0 | 100.0 | 100.0 | 100.0 | 100.0 | 100.0 |
| Polymerization initiator [parts] | APS | 0.1 | 0.1 | 0.1 | 0.1 | 0.1 | 0.1 | | 0.1 | |
| | V-601 | | | | | | | 1 | | 1 |
| Chain transfer agent [parts] | LSH | | | | | | | | | |
| Surfactant [parts] *Effective amount in parentheses | ABS | 17.5 (2.8) | 17.5 (2.8) | 17.5 (2.8) | 17.5 (2.8) | | | | | |
| | AES | | | | | 2.7 | 2.7 | | 2.7 | |
| Polymerization medium [parts] | Ion-exchanged water | 200 | 200 | 200 | 200 | 215 | 215 | | 215 | |
| | MEK | | | | | | | 100 | | 100 |
| | IPA | | | | | | | | | |

EP 4 534 626 A1

(continued)

| Table 2 | | Production Example 1 | Production Example 2 | Production Example 3 | Production Example 4 | Production Example 5 | Production Example 6 | Production Example 7 | Production Example 8 | Production Example 9 |
|---|---|---|---|---|---|---|---|---|---|---|
| Polymerization method | | A | A | A | A | A | B | C | B | C |
| Polymerization temperature [°C] | | About 60 | About 60 | About 60 | About 60 | About 60 | About 60 | About 80 | About 60 | About 80 |
| Polymerization time [h] | | 6 | 6 | 6 | 6 | 6 | 6 | 8 | 6 | 8 |
| Polymer content in aqueous dispersion [mass%] *1, *2 | | 30 | 30 | 30 | 30 | 30 | 30 | 20 | 30 | 17 |
| Acidic fun | ctional group | -COOH, -OSO$_3$H | -COOH, -OSO$_3$H | -COOH, -OSO$_3$H | -COOH, -OSO$_3$H | -COOH, -OSO$_3$H | -COOH, -OSO$_3$H | -COOH | -COOH, -OSO$_3$H | -COOH |
| Content of acidic functional group [mass%] *1 | Derived from monomer | 3.1 | 3.1 | 3.1 | 2.5 | 3.1 | 3.1 | 12.4 | 3.1 | 12.4 |
| | Derived from initiator | 0.1 | 0.1 | 0.1 | 0.1 | 0.1 | 0.1 | 0.0 | 0.1 | 0.0 |
| | Total | 3.2 | 3.2 | 3.2 | 2.6 | 3.2 | 3.2 | 12.4 | 3.2 | 12.4 |
| Degree of neutralization of acidic functional group [mol%] | Derived from monomer | 0 | 0 | 0 | 0 | 0 | 0 | 70 | 0 | 70 |
| | Derived from initiator | 100 | 100 | 100 | 100 | 100 | 100 | | 100 | |
| Content of neutralized acidic functional group [mass%] *1, *2 | Derived from monomer | 0.0 | 0.0 | 0.0 | 0.0 | 0.0 | 0.0 | 8.7 | 0.0 | 8.7 |
| | Derived from initiator | 0.1 | 0.1 | 0.1 | 0.1 | 0.1 | 0.1 | 0.0 | 0.1 | 0.0 |
| | Total | 0.1 | 0.1 | 0.1 | 0.1 | 0.1 | 0.1 | 8.7 | 0.1 | 8.7 |

*1: The polymerization initiator and the chain transfer agent are regarded to be entirely incorporated in the polymer structure.
*2: The weight of the neutralizing agent is not included.

[Table 3]

| Table 3 | | Production Example 10 | Production Example 11 | Production Example 12 | Production Example 13 | Production Example 14 | Production Example 15 | Production Example 16 | Production Example 17 | Production Example 18 |
|---|---|---|---|---|---|---|---|---|---|---|
| Hydrocarbon group-containing monomer [mass%] | MMA | | | | | | | | | |
| | EA | | | | | | | | | |
| | BA | | | | | | | | | |
| | BI-HEA | | | | | | | | | |
| | EHA | | | | | | | | | |
| | LA | | | | | | | | | |
| | SA | 95 | 80 | 70 | 60 | 80 | 85 | 70 | 75 | 70 |
| | SMA | | | | | | | | | |
| Acidic group-containing monomer [mass%] | AA | 5 | 20 | 30 | 40 | | | 20 | 20 | 20 |
| | MAA | | | | | 20 | | | | |
| | AAMPS | | | | | | 15 | | | |
| [mass%] Nonionic functional group-containing monomer [mass%] | AN | | | | | | | 10 | | |
| | HEMA | | | | | | | | 5 | 10 |
| | VP | | | | | | | | | |
| Total amount of monomers [parts] | | 100.0 | 100.0 | 100.0 | 100.0 | 100.0 | 100.0 | 100.0 | 100.0 | 100.0 |
| Polymerization initiator [parts] | APS | 0.1 | | | | | | | | |
| | V-601 | | 1 | 1 | 1 | 1 | 1 | 1 | 1 | 1 |
| Chain transfer agent [parts] | LSH | | | | 1.5 | | | | | |
| Surfactant [parts] *Effective amount in parentheses | ABS | | | | | | | | | |
| | AES | 2.7 | | | | | | | | |
| Polymerization medium [parts] | Ion-exchanged water | 215 | | | | | 25 | | | |
| | MEK | | 100 | 100 | 100 | 100 | 100 | 100 | 100 | 100 |
| | IPA | | | | | 50 | 75 | | | |

(continued)

| Table 3 | | Production Example 10 | Production Example 11 | Production Example 12 | Production Example 13 | Production Example 14 | Production Example 15 | Production Example 16 | Production Example 17 | Production Example 18 |
|---|---|---|---|---|---|---|---|---|---|---|
| Polymerization method | | B | C | C | C | C | - | C | C | C |
| Polymerization temperature [°C] | | About 60 | About 80 | About 80 | About 80 | About 80 | About 80 | About 75 | About 80 | About 80 |
| Polymerization time [h] | | 6 | 8 | 8 | 8 | 8 | 8 | 8 | 8 | 8 |
| Polymer content in aqueous dispersion [mass%] *1, *2 | | 30 | 20 | 20 | 15 | 20 | 20 | 20 | 20 | 20 |
| Acidic functional group | | -COOH, -OSO$_3$H | -COOH | -COOH | -COOH | -COOH | -SO$_3$H | -COOH | -COOH | -COOH |
| Content of acidic functional group [mass%] *1 | Derived from monomer | 3.1 | 12.4 | 18.6 | 24.4 | 10.4 | 5.8 | 12.4 | 12.4 | 12.4 |
| | Derived from initiator | 0.1 | 0.0 | 0.0 | 0.0 | 0.0 | 0.0 | 0.0 | 0.0 | 0.0 |
| | Total | 3.2 | 12.4 | 18.6 | 24.4 | 10.4 | 5.8 | 12.4 | 12.4 | 12.4 |
| Degree of neutralization of acidic functional group [mol%] | Derived from monomer | 0 | 70 | 70 | 70 | 70 | 100 | 70 | 70 | 70 |
| | Derived from initiator | 100 | | | | | | | | |
| Content of neutralized acidic functional group [mass%] *1, *2 | Derived from monomer | 0.0 | 8.7 | 13.0 | 17.1 | 7.3 | 5.8 | 8.7 | 8.7 | 8.7 |
| | Derived from initiator | 0.1 | 0.0 | 0.0 | 0.0 | 0.0 | 0.0 | 0.0 | 0.0 | 0.0 |
| | Total | 0.1 | 8.7 | 13.0 | 17.1 | 7.3 | 5.8 | 8.7 | 8.7 | 8.7 |

*1: The polymerization initiator and the chain transfer agent are regarded to be entirely incorporated in the polymer structure.
*2: The weight of the neutralizing agent is not included.

[Table 4]

| Table 4 | | Production Example 19 | Production Example 20 | Production Example 21 | Production Example 22 | Production Example 23 | Comparative Production Example 1 | Comparative Production Example 2 |
|---|---|---|---|---|---|---|---|---|
| Hydrocarbon group-containing monomer [mass%] | MMA | | | | | | 17 | |
| | EA | | | | | | | |
| | BA | | | | | | 52 | |
| | BI-HEA | | | | | | | |
| | EHA | | | | | | | |
| | LA | | | | | | | |
| | SA | 70 | | 90 | 85 | 82 | | 80 |
| | SMA | | 80 | | | | | |
| Acidic group-containing monomer [mass%] | AA | 20 | | 5 | 5 | 5 | | 5 |
| | MAA | | 20 | | | | | |
| | AAMPS | | | | | | | |
| Nonionic functional group-containing monomer [mass%] | AN | | | | | | 28 | |
| | HEMA | | | 5 | 10 | 13 | 3 | 15 |
| | HEMA VP | 10 | | | | | | |
| Total amount of monomers [parts] | | 100.0 | 100.0 | 100.0 | 100.0 | 100.0 | 100.0 | 100.0 |
| Polymerization initiator [parts] | APS | | | 0.1 | 0.1 | | 0.1 | |
| | V-601 | 1 | 1 | | | 1 | | 1 |
| Chain transfer agent [parts] | LSH | | | | | | | |
| Surfactant [parts] *Effective amount in parentheses | ABS | | | | | | 17.5 (2.8) | |
| | AES | | | 2.7 | 2.7 | | | |
| Polymerization medium [parts] | Ion-exchanged water | | | 215 | 215 | | 200 | |
| | MEK | 170 | 100 | | | 100 | | 100 |
| | IPA | | | | | | | |

(continued)

| Table 4 | | Production Example 19 | Production Example 20 | Production Example 21 | Production Example 22 | Production Example 23 | Comparative Production Example 1 | Comparative Production Example 2 |
|---|---|---|---|---|---|---|---|---|
| Polymerization method | | C | C | B | B | C | A | C |
| Polymerization temperature [°C] | | About 80 | About 80 | About 60 | About 60 | About 80 | About 60 | About 80 |
| Polymerization time [h] | | 8 | 8 | 14 | 14 | 8 | 6 | 8 |
| Polymer content in aqueous dispersion [mass%] *1, *2 | | 15 | 20 | 30 | 30 | 20 | 30 | 20 |
| Acidic functional group | | -COOH | -COOH | -COOH, -OSO$_3$H | -COOH, -OSO$_3$H | -COOH | -OSO$_3$H | -COOH |
| Content of acidic functional group [mass%] *1 | Derived from monomer | 12.4 | 10.4 | 3.1 | 3.1 | 3.1 | 0.0 | 3.1 |
| | Derived from initiator | 0.0 | 0.0 | 0.1 | 0.1 | 0.0 | 0.1 | 0.0 |
| | Total | 12.4 | 10.4 | 3.2 | 3.2 | 3.1 | 0.1 | 3.1 |
| Degree of neutralization of acidic functional group [mol%] | Derived from monomer | 70 | 70 | 0 | 0 | 70 | | 70 |
| | Derived from initiator | | | 100 | 100 | | 100 | |
| Content of neutralized acidic functional group [mass%] *1, *2 | Derived from monomer | 8.7 | 7.3 | 0.0 | 0.0 | 2.2 | 0.0 | 2.2 |
| | Derived from initiator | 0.0 | 0.0 | 0.1 | 0.1 | 0.0 | 0.1 | 0.0 |
| | Total | 8.7 | 7.3 | 0.1 | 0.1 | 2.2 | 0.1 | 2.2 |

*1: The polymerization initiator and the chain transfer agent are regarded to be entirely incorporated in the polymer structure.
*2: The weight of the neutralizing agent is not included.

21

<Examples 1 to 33, Comparative Examples 1 to 9>

A neutralizing agent was added to an oil-proof agent composition, as necessary, to adjust the degree of neutralization indicated in the table, and the mixture was treated with a size press.

[Table 5]

| Table 5 | | Example 1 | Example 2 | Example 3 | Example 4 | Comparative Example 1 | Comparative Example 2 |
|---|---|---|---|---|---|---|---|
| Oil-proof agent | | Production Example 1 | Production Example 1 | Production Example 1 | Production Example 1 | Production Example 1 | Comparative Production Example 1 |
| Neutralizing agent (additional) | | NaOH | NaOH | NaOH | NaOH | - | - |
| Content of neutralized acidic functional group [mass%] *1, *2 | | 0.4 | 0.7 | 1.6 | 3.2 | 0.1 | 0.1 |
| Treating method | | Size pressing | | | | | |
| Dry treatment amount [g/m$^2$] *2, *3 | | 10 | 10 | 10 | 10 | 10 | 10 |
| Oil-proof property (plane KIT) | Base paper A | 1 | 2 | 3 | 3 | 0-1 | 0 |
| | Base paper C | 2-3 | 3 | 3 | 5 | 0-1 | 0 |
| Air permeability [s] | Base paper A | 28 | 50 | 55 | 33 | 66 | 36 |
| | Base paper C | 15 | 40 | 49 | 34 | 83 | 35 |
| *1: The polymerization initiator and the chain transfer agent are regarded to be entirely incorporated in the polymer structure. *2: The weight of the neutralizing agent is not included. *3: The weight of additives such as s surfactant is not included. | | | | | | | |

By adjusting the content of the neutralized acidic functional group in the polymers within the prescribed range of the present invention, superior oil-proof properties and air permeability were obtained. Furthermore, when a cationic wet paper strength enhancer was added to the base paper, there was exhibited a tendency that oil-proof properties were improved compared to the unadded base paper, probably by adsorption due to ionicity. In addition, surprisingly, base paper to which no chemical agent is added is generally conceivable to be anionic, and a cationic oil-proof agent is preferable from the viewpoint of adsorption due to ionicity, but it has been found that the oil-proof properties are also improved in such a base paper by adjusting the content of the neutralized acidic functional group in the polymer within the prescribed range of the present invention.

[Table 6]

| Table 6 | | Example 5 | Example 6 | Example 7 | Example 8 | Example 9 | Example 10 | Example 11 | Example 12 | Example 13 | Example 14 | Example 15 | Comparative Example 3 | Comparative Example 4 | Comparative Example 5 | Comparative Example 6 |
|---|---|---|---|---|---|---|---|---|---|---|---|---|---|---|---|---|
| Oil-proof agent | | Production Example 1 | Production Example 2 | Production Example 3 | Production Example 4 | Production Example 5 | Production Example 6 | Production Example 6 | Production Example 7 | Production Example 8 | Production Example 8 | Production Example 9 | Production Example 4 | Production Example 5 | Production Example 6 | Production Example 8 |
| Neutralizing agent (additional) | | TEA | NaOH | NaOH | NaOH | NaOH | NaOH | NaOH | - | NaOH | NaOH | - | - | - | - | - |
| Content of neutralized acidic functional group [mass%] *1, *2 | | 3.2 | 2.0 | 2.0 | 2.6 | 3.2 | 0.4 | 2.3 | 8.7 | 0.4 | 2.3 | 8.7 | 0.1 | 0.1 | 0.1 | 0.1 |
| Treating method | | Size pressing | | | | | | | | | | | | | | |
| Dry treatment amount [g/m$^2$] *2, *3 | | 9.0 | 10 | 10 | 13 | 7.8 | 7.5 | 9.9 | 6.2 | 7.6 | 9.7 | 5.6 | 8.7 | 7.8 | 7.5 | 7.6 |
| Oil-proof property (plane KIT) | Base paper A | 2 | 3 | 1 | | 2 | | 4 | 3 | | 3 | 2 | | 0 | | |
| | Base paper B | 3 | 3 | 2 | 5 | 2 | 1 | 4 | 4 | 2 | 5 | 2 | 0 | 0 | 0 | 0-1 |
| | Base paper C | 3 | 3 | | | 1 | | 4 | 3 | | 4 | 1 | | 0 | | |

(continued)

| Table 6 | | Example 5 | Example 6 | Example 7 | Example 8 | Example 9 | Example 10 | Example 11 | Example 12 | Example 13 | Example 14 | Example 15 | Comparative Example 3 | Comparative Example 4 | Comparative Example 5 | Comparative Example 6 |
|---|---|---|---|---|---|---|---|---|---|---|---|---|---|---|---|---|
| Air permeability [s] | Base paper A | 15 | 29 | 9 | | 8 | | 13 | 32 | | 5 | 5 | | 6 | | |
| | Base paper B | 41 | 54 | 12 | 10 | 8 | 8 | 15 | 28 | 8 | 32 | 7 | 9 | 8 | 8 | 4 |
| | Base paper C | 27 | **41** | | | 13 | | 12 | 14 | | 16 | 14 | | 9 | | |

*1: The polymerization initiator and the chain transfer agent are regarded to be entirely incorporated in the polymer structure.

*2: The weight of the neutralizing agent is not included.

*3: The weight of additives such as s surfactant is not included.

[Table 7]

| Table 7 | | Example 16 | Example 17 | Example 18 | Example 19 | Example 20 | Example 21 | Example 22 | Example 23 | Comparative Example 7 | Comparative Example 8 |
|---|---|---|---|---|---|---|---|---|---|---|---|
| Oil-proof agent | | Production Example 10 | Production Example 10 | Production Example 11 | Production Example 11 | Production Example 12 | Production Example 12 | Production Example 12 | Production Example 13 | Production Example 10 | Production Example 13 |
| Neutralizing agent (additional) | | NaOH | NaOH | - | NaOH | - | NaOH | NaOH | NaOH | - | NaOH |
| Content of neutralized acidic functional group [mass%] *1, *2 | | 2.3 | 3.2 | 8.7 | 12.4 | 13.0 | 14.9 | 18.6 | 20.7 | 0.1 | 24.4 |
| Treating method | | Size pressing | | | | | | | | | |
| Dry treatment amount [g/m2] *2, *3 | | 7.5 | 7.5 | 6.3 | 6.3 | 5.6 | 5.6 | 5.6 | 4.7 | 7.5 | 4.7 |
| Oil-proof property (plane KIT) | Base paper A | 4 | 4 | 1 | 3 | 2 | 1 | 1 | 0-1 | 0 | 0 |
| | Base paper B | 5 | 5 | 2 | 4 | 2-3 | 1-2 | 1 | 1 | 0-1 | 0 |
| | Base paper C | 5 | 5 | 2 | 3 | 2 | 1 | 1 | 1 | 0 | 0 |
| Air permeability [s] | Base paper A | 11 | 8 | 42 | 18 | 9 | 14 | 8 | 7 | 7 | 4 |
| | Base paper B | 13 | 17 | 53 | 39 | 17 | 17 | 14 | 16 | 20 | 12 |
| | Base paper C | 16 | 5 | 46 | 30 | 12 | 8 | 5 | 9 | 13 | 11 |

*1: The polymerization initiator and the chain transfer agent are regarded to be entirely incorporated in the polymer structure.
*2: The weight of the neutralizing agent is not included.
*3: The weight of additives such as s surfactant is not included.

[Table 8]

| Table 8 | | Example 24 | Example 25 | Example 26 | Example 27 | Example 28 | Example 29 | Example 30 | Example 31 | Example 32 | Example 33 | Comparative Example 9 |
|---|---|---|---|---|---|---|---|---|---|---|---|---|
| Oil-proof agent | | Production Example 14 | Production Example 15 | Production Example 16 | Production Example 17 | Production Example 18 | Production Example 19 | Production Example 20 | Production Example 21 | Production Example 22 | Production Example 23 | Comparative Production Example 2 |
| Neutralizing agent (additional) | | - | - | - | - | - | - | - | NaOH | NaOH | - | - |
| Content of neutralized acidic functional group [mass%] *1, *2 | | 7.3 | 5.8 | 8.7 | 8.7 | 8.7 | 8.7 | 7.3 | 2.3 | 2.3 | 2.2 | 2.2 |
| Treating method | | Size pressing | | | | | | | | | | |
| Dry treatment amount [g/m²] *2, *3 | | 6.4 | 6.5 | 6.8 | 6.5 | 6.5 | 5.7 | 6.8 | 6.8 | 6.8 | 6.8 | 6.8 |
| Oil-proof property (plane KIT) | Base paper A | 3 | | 3 | 2 | 3 | 4-5 | 3 | | | | 0 |
| | Base paper B | 4 | 1 | 3-4 | 3 | 4 | 4-5 | 4 | 5 | 5 | 5 | 0 |
| | Base paper C | 3 | | 3 | 3 | 4 | 4 | 3 | | | | 0 |

EP 4 534 626 A1

26

(continued)

| Table 8 | | Example 24 | Example 25 | Example 26 | Example 27 | Example 28 | Example 29 | Example 30 | Example 31 | Example 32 | Example 33 | Comparative Example 9 |
|---|---|---|---|---|---|---|---|---|---|---|---|---|
| Air permeability [s] | Base paper A | 18 | | 8 | 14 | 18 | 12 | 14 | | | | 11 |
| | Base paper B | 39 | 5 | 21 | 26 | 26 | 36 | 36 | 5 | 7 | 18 | 27 |
| | Base paper C | 30 | | 11 | 21 | 9 | 19 | 11 | | | | 9 |

*1: The polymerization initiator and the chain transfer agent are regarded to be entirely incorporated in the polymer structure.
*2: The weight of the neutralizing agent is not included.
*3: The weight of additives such as s surfactant is not included.

When the content was within the prescribed range of the present invention, superior oil-proof properties and air permeability were obtained. In addition, from the results of Example 33 and Comparative Example 9, it has become clear that sufficient oil-proof properties cannot be obtained by the invention disclosed in PTL 3, and when the nonionic functional group of a copolymer containing a constitutional units derived from an unsaturated monomer having a hydrocarbon group having 1 to 60 carbon atoms, an unsaturated monomer having an acidic functional group, and an unsaturated monomer having a nonionic functional group is a hydroxy group, it is important to control the mass ratio of the unsaturated monomer having a hydroxy group as a nonionic functional group to the unsaturated monomer having an acidic functional group (unsaturated monomer having a hydroxy group/unsaturated monomer having an acidic functional group) to 2.6 or less. The mass ratio is 2.6 in Example 33 and 3.0 in Comparative Example 9. In addition, the mass ratio in Examples disclosed in PTL 3 is 2.67 or more.

As a result of evaluating the water resistance of Examples 8 and 18, the Stöckigt sizings of the base paper B were 2 seconds and 11 seconds, respectively, and it was possible to adjust the water resistance while maintaining the oil-proof properties and air permeability by controlling the chain length of the hydrocarbon group.

• Method for producing non-fluorinated oil-proof agent composition

<Production Example 24>

Stearic acid (1.0 parts), a 48% aqueous sodium hydroxide solution (0.3 parts), ethanol (50.0 parts), and ion-exchanged water (48.7 parts) were added to a reaction vessel, heated and refluxed until a solid could not be visually confirmed, and cooled to 40°C, affording a dispersion.

<Production Example 25>

Phoslex A-18(1.0 parts, stearyl acid phosphate manufactured by SC Organic Chemical Co., Ltd.: Mw: 437 (average value)), a 4.8% aqueous sodium hydroxide solution (3.2 parts), and ion-exchanged water (75.8 parts) were added, and the mixture was heated and refluxed until a solid could not be visually confirmed. Thereafter, the mixture was cooled to 40°C, and ethanol (20 parts) was added thereto, affording a dispersion. Stearyl acid phosphate is a mixture of a monoester form (Mw: 350.47) and a diester form (Mw: 602.95), and the diester form falls within the prescribed range of the present invention.

<Examples 34 and 35>

The results obtained by bar coating the paper substrate with the oil-proof agent compositions containing a low-molecular compound of Production Examples 24 and 25 are shown in Table 9.

[Table 9]

| Table 9 | | Example 34 | Example 35 |
|---|---|---|---|
| Oil-proof agent | | Production Example 24 | Production Example 25 |
| Acidic functional group | | -COOH | -OP(=O)(OH)O- |
| Degree of neutralization of acidic functional group [mol%] | | 100 | 100 |
| Content of neutralized acidic functional group [mass%] *2 | | 15.8 | 15.9 |
| Treating method | | Bar coating | |
| Number of times of treatment | | 3 | 7 |
| Dry treatment amount [g/m$^2$] *2 | | 2.1 | 2.2 |
| Oil-proof property (plane KIT) | Base paper C | 5 | 6 |
| Air permeability [s] | Base paper C | 53 | 100 |
| *2: The weight of the neutralizing agent is not included. | | | |

The present invention was compared with the "Joncryl PDX-7326 (manufactured by BASF, nonvolatile content: 38.5%)" disclosed in PTL 4.

[Table 10]

| Table 10 | | Example 36 | Example 37 | Comparative Example 10 | Comparative Example 11 | Comparative Example 12 | Comparative Example 13 | Comparative Example 14 |
|---|---|---|---|---|---|---|---|---|
| Oil-proof agent | | Production Example 19 | Production Example 19 | PDX-7326 | PDX-7326 | PDX-7326 | PDX-7326 | PDX-7326 |
| Content of neutralized acidic functional group [mass%] *2 | | 8.7 | 8.7 | - | - | - | - | - |
| Treating method | | Bar coating | Bar coating | Size pressing | Size pressing | Bar coating | Bar coating | Bar coating |
| Number of times of treatment | | 1 | 1 | | | 1 | 1 | 1 |
| Dry treatment amount [g/m²] *2 | | 3.3 | 4.3 | 7.6 | 13.3 | 5.5 | 7.9 | 4.3 |
| Oil-proof property (plane KIT) | Base paper A | 5 | | 0 | 0 | 0 | 0 | |
| | Base paper B | - | | 0 | 1 | | | |
| | Base paper C | | 5 | 0 | 0-1 | | | 6 |
| Air permeability [s] | Base paper A | 34 | | 15 | 104 | < 3 | < 3 | |
| | Base paper B | | | 17 | > 2000 | | | |
| | Base paper C | | 80 | 14 | 77 | | | 1705 |

*2: The weight of the neutralizing agent is not included.

The present invention was superior in oil-proof properties and air permeability, but it is difficult to achieve both these properties in the oil-proof agent described in PTL 4.

Industrial Applicability

By use of the non-fluorinated oil-proof agent composition of the present invention, an oil-proof article can be provided.

The oil-proof paper of the present invention is useful as a food packaging container, food packaging paper, food mat paper, and the like.

**Claims**

1. A non-fluorinated oil-proof agent composition comprising a non-fluorinated compound having a hydrocarbon group having 1 to 60 carbon atoms and a neutralized acidic functional group in at least a constitutional unit thereof,

   wherein a proportion of the neutralized acidic functional group in the non-fluorinated compound is 0.4 to 21% by mass,
   when the non-fluorinated compound is a copolymer containing constitutional units derived from an unsaturated monomer having a hydrocarbon group having 1 to 60 carbon atoms, an unsaturated monomer having an acidic functional group, and an unsaturated monomer having a nonionic functional group, and the unsaturated monomer having a nonionic functional group is an unsaturated monomer having a hydroxy group as a nonionic functional group, a mass ratio of the unsaturated monomer having a hydroxy group to the unsaturated monomer having an acidic functional group (the unsaturated monomer having a hydroxy group/the unsaturated monomer having an acidic functional group) is 2.6 or less.

2. The non-fluorinated oil-proof agent composition according to claim 1, wherein the non-fluorinated compound contains a structure derived from the unsaturated monomer having a hydrocarbon group having 1 to 60 carbon atoms and the unsaturated monomer having an acidic functional group.

3. The non-fluorinated oil-proof agent composition according to claim 1 or 2, wherein the non-fluorinated compound further contains a structure derived from the unsaturated monomer having a nonionic functional group.

4. The non-fluorinated oil-proof agent composition according to claim 3, wherein the nonionic functional group is at least one selected from the group consisting of a hydroxy group, a phenolic hydroxy group, a nitrile group, an amide group, a (thio)urethane group, a (thio)urea group, a (thio)carbonate group, and an ester group.

5. The non-fluorinated oil-proof agent composition according to claim 1 or 2, which is used for paper applications.

6. The non-fluorinated oil-proof agent composition according to claim 1 or 2, which is used for food contact applications.

7. An oil-proof product in which the non-fluorinated compound according to claim 1 or 2 is present on at least one of a surface or an interior part of a substrate.

8. Oil-proof paper including the non-fluorinated compound according to claim 1 or 2, wherein a plane portion of the oil-proof paper has a kit value measured in accordance with TAPPI UM-557 of 1 to 6.

9. The oil-proof paper according to claim 8, wherein the oil-proof paper has a Gurley air permeance measured in accordance with JIS P 8117: 2009 of 1000 seconds or less.

## INTERNATIONAL SEARCH REPORT

| International application No. |
| --- |
| **PCT/JP2023/018639** |

**A. CLASSIFICATION OF SUBJECT MATTER**

*C09K 3/00*(2006.01)i; *D21H 19/20*(2006.01)i; *D21H 21/14*(2006.01)i
FI: C09K3/00 112Z; D21H19/20 A; D21H21/14 Z

According to International Patent Classification (IPC) or to both national classification and IPC

**B. FIELDS SEARCHED**

Minimum documentation searched (classification system followed by classification symbols)

C09K3/00; C09D1/00-10/00; C09D101/00-201/10; D21B1/00-1/38; D21C1/00-11/14; D21D1/00-99/00; D21F1/00-13/12; D21G1/00-9/00; D21H11/00-27/42; D21J1/00-7/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2021/094437 A1 (BASF SE) 20 May 2021 (2021-05-20) claims 1, 13, 19-21, 34-35, 37, 39, paragraphs [0006], [0065], [0089], examples 1-3, 7, 12 | 1-9 |
| X | JP 1-148550 A (KOHJIN CO LTD) 09 June 1989 (1989-06-09) claim 1, p. 1, right column, line 17 to p. 2, left column, line 5, examples 1-4 | 1-4, 6-7 |
| A | | 5, 8-9 |
| X | JP 11-247099 A (ARAKAWA CHEM IND CO LTD) 14 September 1999 (1999-09-14) claims 1-2, paragraphs [0006], [0029], examples 2-4, 10-12, 17 | 1-5, 7 |
| A | | 6, 8-9 |
| X | JP 2000-345097 A (MITSUI CHEMICALS INC) 12 December 2000 (2000-12-12) claims 1, 5, paragraphs [0001], [0007], [0074], [0076], example 1 | 1, 5, 7-9 |
| A | | 2-4, 6 |
| X | JP 2003-55152 A (GE TOSHIBA SILICONES CO LTD) 26 February 2003 (2003-02-26) claim 1, paragraphs [0001], [0086], example 6 | 1 |
| A | | 2-9 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **31 July 2023** | **08 August 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

# EP 4 534 626 A1

## INTERNATIONAL SEARCH REPORT

International application No.

**PCT/JP2023/018639**

### C.    DOCUMENTS CONSIDERED TO BE RELEVANT

| Category* | Citation of document, with indication, where appropriate, of the relevant passages | Relevant to claim No. |
|---|---|---|
| E, X | JP 2023-94001 A (DAINIPPON INK & CHEMICALS) 05 July 2023 (2023-07-05) claims 1-2, 7, 10, paragraphs [0001], [0008], examples 1-2 | 1-9 |

Form PCT/ISA/210 (second sheet) (January 2015)

32

**INTERNATIONAL SEARCH REPORT**
Information on patent family members

International application No.

**PCT/JP2023/018639**

| Patent document cited in search report | | | Publication date (day/month/year) | Patent family member(s) | Publication date (day/month/year) |
|---|---|---|---|---|---|
| WO | 2021/094437 | A1 | 20 May 2021 | JP 2023-501677 A claims 1, 13-7, 19-21, 34-35, 37, 39, paragraphs [0008]-[0065], [0089], examples 1-3, 7, 12 US 2022/0380981 A1 EP 4058518 A1 CN 114651047 A KR 10-2022-0103103 A | |
| JP | 1-148550 | A | 09 June 1989 | (Family: none) | |
| JP | 11-247099 | A | 14 September 1999 | (Family: none) | |
| JP | 2000-345097 | A | 12 December 2000 | (Family: none) | |
| JP | 2003-55152 | A | 26 February 2003 | (Family: none) | |
| JP | 2023-94001 | A | 05 July 2023 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020122250 A
- JP 2013237941 A
- WO 2020054856 A
- JP 2014025163 A
- JP 2019026746 A
- JP 2017066325 A
- WO 2019026593 A
- JP 2019026747 A
- JP 2018506657 A
- WO 2016178429 A
- JP 2017538793 A
- JP 2021014482 A
- JP 2017155095 A